# EUROPÄISCHE PATENTANMELDUNG

(11) **EP 1 296 463 A1**
(43) Veröffentlichungstag der Anmeldung: **26.03.2003**
(21) Anmeldenummer: 01122389.8
(22) Anmeldetag: 19.09.2001
(51) Int. Cl.: H04B 7/005, H04L 1/00

(54) **Kanalangepasste Informationsübertragung in einem Funk-Kommunikationssystem**

(71) Anmelder: SIEMENS AKTIENGESELLSCHAFT, 80333 München (DE)
(72) Erfinder: Kadelka, Arndt, 50674 Köln (DE); Krämling, Andreas, 53225 Bonn (DE); Lott, Matthias, 81477 München (DE); Schulz, Egon, Dr., 80993 München (DE); Siebert, Mathias, 52072 Aachen (DE); Sumaryo, Sony, 52072 Aachen (DE); Weckerle, Martin, 81359 München (DE)

(57) **Zusammenfassung**

Die Erfindung betrifft ein Verfahren zum Übertragen von Informationen in einem Funk-Kommunikationssystem mit mindestens einer Basisstation und mindestens einer Teilnehmerstation, welche über eine Funkschnittstelle miteinander verbunden sind. Dabei erfolgt die Übertragung mittels eines TDMA-Vielfachzugriffsverfahrens mit einer zeitlichen Rahmenstruktur. In einer gegebenen Zeitspanne der Rahmenstruktur werden bei einer zu übertragenden Informationsmenge die Informationen über unterschiedliche Modulationen und/oder Codierungen bei variabler Sendeleistung übertragen. Erfindungsgemäß werden innerhalb der Zeitspanne die Modulation und/oder Codierung derart gewählt, dass die Übertragungszeit für die zu übertragende Informationsmenge der Länge der Zeitspanne angenähert ist. Damit wird eine Verbesserung der Interferenzsituation bewirkt. Insbesondere kann die Sendeleistung im wesentlichen homogen über die Zeitspanne verteilt werden.

## Beschreibung

Die Erfindung betrifft ein Verfahren zum Übertragen von Informationen in einem Funkkommunikationssystem mit mindestens einer Basisstation und mindestens einer Teilnehmerstation, welche über eine Funkschnittstelle miteinander verbunden sind, nach dem Oberbegriff des Anspruchs 1.

In Funk-Kommunikationssystemen werden Informationen (beispielsweise Sprache, Bildinformation oder andere Daten) mit Hilfe von elektromagnetischen Wellen über eine Funkschnittstelle zwischen einer Basisstation und einer Mobilstation übertragen. Das Abstrahlen der elektromagnetischen Wellen erfolgt dabei mit Trägerfrequenzen, die in dem für das jeweilige System vorgesehenen Frequenzband liegen.

Bei Funk-Kommunikationssystemen wird der Zugriff von Stationen auf ein gemeinsames Übertragungsmedium durch Vielfach zugriffsverfahren (Multiple Access, MA) ermöglicht. Für den Vielfachzugriff kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Stationen aufgeteilt werden. Dabei findet häufig (zum Beispiel bei GSM [Global System for Mobile Communications], TETRA [Terestrial Trunked Radio], DECT [Digital European Cordless Telephone]) eine Unterteilung des Mediums in Frequenz- oder Zeitkanäle statt. Bei dezentral koordinierten Systemen wird anhand von Messungen über die Verwendbarkeit eines Kanals entschieden. Entsprechend der Funkausbreitung, das heißt abhängig von der Funkfelddämpfung, ist eine Wiederverwendung eines Kanals in einem entsprechenden Abstand möglich.

Beim TDMA-Vielfachzugriffsverfahren erfolgt die Übertragung von Informationen in einer zeitlichen Rahmenstruktur. Beim Zeitmultiplex-Verfahren wird ein Funkkanal in seiner gesamten Bandbreite genutzt, dabei aber in Zeitschlitze (Slots) unterteilt, wobei die Zeitschlitze dann jeder Station periodisch für die Dauer der Verbindung fest zugewiesen werden. In einem Zeitschlitz kann die übertragende Station eine bestimmte Informationsmenge, das heißt eine bestimmte Anzahl an Datenbits, unterbringen. Ein Zeitkanal wird durch die Folge der durch eine Station genutzten Zeitschlitze gebildet.

Zukünftige Funksysteme (EDGE [Enhanced Data Rates for GSM E-volution], HIPERLAN/2 [High Performance Radio Local Area Network Type 2], IEEE802.11a [Institute of Electrical and E-lectronical Engineering]) zeichnen sich durch eine paketorientierte Übertragung aus. Beim TDMA-Verfahren wird nicht ein Zeitkanal fest einer Station zugewiesen, sondern die Pakete von verschiedenen Stationen (verschiedene Funkverbindungen) werden auf einen gemeinsamen Kanal gemultiplext. In einer gegebenen Zeitspanne der Rahmenstruktur werden bei einer zu übertragenden Informationsmenge die Informationen über unterschiedliche Modulationen und/oder Codierungen bei variabler Sendeleistung übertragen. Dabei stehen unterschiedliche Modulationen und Codierungen zur Verfügung. Unter Zeitspanne ist ein Zeitintervall zu verstehen, welches kürzer als die oder gleich der Länge der Rahmenstruktur ist. Im Falle von HIPERLAN/2 bietet die physikalische Schicht (Physical Layer nach OSI-Modell) sieben unterschiedliche Kombinationen von Modulation und Codierung, die zu einer Datenrate zwischen 6 Mbit/s und 54 Mbit/s führen. Diese Kombinationen werden als PHY-Modi bezeichnet. Zur Auswahl des PHY-Modus werden Messungen am jeweiligen Empfänger durchgeführt (CIR [Channel to Interference Ratio] und/oder PER [Packed Error Rates]), auf deren Basis der zukünftige Kanalzustand geschätzt wird.

Durch Belegung beziehungsweise Zuweisung von Kanälen steht den Stationen eine bestimmte Übertragungsdauer zur Verfügung.

Auf Grund der oben beschriebenen Auswahlkriterien des PHY-Modus resultiert eine Datenrate für diese bestimmte Übertragunsdauer, die höher als das Datenaufkommen der Verbindung sein kann, so dass ein Teil der verfügbaren Übertragungsdauer unbenutzt bleibt. Die beschriebene Übertragung erfolgt in verschiedenen Zellen des Funk-Kommunikationssystems. Dies führt zu einer erhöhten Schwankung der Interferenz innerhalb der Zeitspanne.

Es wird daher angestrebt, die Interferenz-Situation positiv zu beeinflussen.

Die Interferenz-Situation kann dadurch beeinflusst werden, dass die Sendeaktivität unterschiedlicher Funkzellen zufällig innerhalb des zur Verfügung stehenden Bereiches verteilt werden. Als Resultat stellt sich eine Verschmierung der Interferenz ein. Abhängig vom Szenario kann die resultierende Interferenz jedoch dennoch sehr stark schwanken.

Eine andere dynamische Möglichkeit besteht darin, nur einen Teil der Übertragungszeit zu verwenden und diesen möglichst lange beizubehalten. Verschiedene Stationen benachbarter Funkzellen können bevorzugten die unbenutzten Bereiche zur Übertragung verwenden. Dadurch stellt sich eine verbesserte Interferenzsituation ein. Ein möglicher Ansatz ist beispielsweise in der deutschen Patentanmeldung DE 198 24 961 A1 dargestellt. Nachteilig ist hierbei der zusätzliche Aufwand bei der Koordinierung der verwendeten Bereiche.

Eine vorhersagbare Interferenzsituation kann durch die intensive Nutzung von fest zugewiesenen Zeitschlitzen erreicht werden, ähnlich wie dies bei verbindungsorientierten Mobilfunksystemen der Fall ist, bei denen die Stationen einen festen Zeitschlitz zugewiesen bekommen. In HIPERLAN/2 können zu diesem Zweck beispielsweise die Fixed-Slot-Allocation (FSA) genutzt werden. Nachteilig wirkt sich bei der Fixed-Slot-Allocation aus, dass durch diese Fixed-Slot-Allocation die dynamische und bedarfsorientierte Zuweisung von Kapazität und damit ein möglicher Gewinn durch Multiplexen verhindert wird.

Der vorliegenden Erfindung liegt daher die Aufgabe zugrunde, ein Verfahren der eingangs genannten Art aufzuzeigen, durch welches die Interferenz zwischen benachbarten Zellen reduziert werden kann. Die Verbesserung der Interferenzsituation zwischen benachbarten Zellen sollte dabei möglichst wenig Nachteile mit sich bringen.

Diese Aufgabe wird durch ein Verfahren mit den Merkmalen nach Anspruch 1 gelöst. Ausgestaltungen und Weiterbildungen der Erfindung sind Gegenstand der Unteransprüche.

Erfindungsgemäß werden innerhalb der Zeitspanne die Modulation und/oder die Codierung derart gewählt, dass die Übertragungszeit für die zu übertragende Informationsmenge der Länge der Zeitspanne angenähert ist. Dadurch kann die Sendeleistung und damit die interzellulare Interferenz bezüglich der pro Zeiteinheit zu übertragenden Informationsmenge reduziert werden.

Besondere Vorteile ergeben sich dadurch, dass die Sendeleistung im Wesentlichen homogen über die Zeitspanne verteilt wird. Damit kann die Sendeleistung in Bezug auf die Zeitspanne minimiert werden und somit die interzellulare Interferenzsituation positiv beeinflusst werden.

Insbesondere kann die Sendeleistung auf über 75 %, vorzugsweise auf über 80 %, besonders bevorzugt auf über 90 % der Zeitspanne verteilt werden. Für das Beispiel von HIPERLAN/2 bedeutet dies, dass durch eine geeignete Wahl des PHY-Modus und der Sendeleistung die verfügbare Übertragungsdauer möglichst gleichmäßig genutzt wird. Durch die geeignete Auswahl des PHY-Modus und die Einstellung der Sendeleistung wird die Übertragungsrate solange reduziert, wie es das momentane Verkehrsaufkommen ermöglicht. Dadurch kann die verfügbare Zeitspanne möglichst vollständig ausgenutzt werden. Durch Reduzierung der Sendeleistung wird die Interferenz in den Nachbarzellen reduziert. Bei Bedarf könnten höhere PHY-Modi eingesetzt werden und damit eine höhere Übertragungsrate zur Verfügung gestellt werden, um einen höheren Kapazitätsbedarf zu bedienen.

In Weiterbildung der Erfindung kann die Sendeleistung im Wesentlichen homogen über die gesamte Rahmenstruktur verteilt werden. Insbesondere kann die Sendeleistung auf über 50 %, vorzugsweise auf über 60 %, besonders bevorzugt auf über 70 % der gesamten Rahmenstruktur verteilt werden.

Bei der Regelung der Sendeleistung kann die Übertragungsgüte mit berücksichtigt werden. Die Sendeleistung kann im Hinblick auf eine geforderte Übertragungsgüte minimiert werden, das heißt, die Sendeleistung wird so geregelt, dass bei möglichst kleiner Sendeleistung eine geforderte Übertragungsgüte eingehalten wird. Insbesondere kann die Sendeleistung so geregelt werden, dass die Übertragungsgüte im Wesentlichen über die Zeitspanne beziehungsweise über den Zeitrahmen konstant bleibt.

Die Übertragung kann in einer variablen Zeitrahmenstruktur oder aber bevorzugt in einer festen zeitlichen Rahmenstruktur erfolgen.

Mit Vorteil ist eine paketweise Übertragung im erfindungsgemäßen Verfahren vorgesehen. Gerade bei der paketorientierten Übertragung können die Schwankungen der Interferenz besonders groß sein. Ausserdem ist bei der paketweisen Übertragung eine Koordinierung der Stationen besonders aufwändig.

In Weiterbildung der Erfindung können die Modulation und/oder Codierung für mindestens eine Basisstation und zumindest zwei mit dieser Basisstation verbundenen Teilnehmerstationen gemeinschaftlich gewählt werden. Dies bringt den Vorteil, dass die Interferenzsituation räumlich betrachtet zumindest für die Funkzelle bis hin zum gesamten Funk-Kommunikationsnetz optimiert werden kann.

Die Sendeleistung und Modulation und/oder Codierung kann in Weiterbildung der Erfindung so gewählt werden, dass die Empfangsleistung am Empfänger im Wesentlichen konstant bleibt. Auf diese Weise kann der Aufwand für die jeweiligen Empfänger - insbesondere im Hinblick auf die Automatic Gain Control (AGC) - vereinfacht werden.

Das erfindungsgemäße Verfahren kann auch auf Übertragungen angewandt werden, bei denen die Übertragung in Aufwärts-(Uplink) und in Abwärtsrichtung (Downlink) im selben Frequenzkanal erfolgt. Dies bedeutet, dass für die Übertragung ein TDMA/TDD-Vielfachzugriffsverfahren angewendet wird. Insbesondere kann das Funk-Kommunikationssystem nach dem HIPERLAN/2-Standard, nach dem IEEE 802.11a-Standard oder nach dem HiSWAN-A-Standard spezifiziert sein.

Die Erfindung betrifft auch Basisstationen zum Übertragen von Informationen in einem Funk-Kommunikationssystem, welche die Durchführung der oben beschriebenen Verfahren gemäß der Erfindung ermöglichen.

Die Erfindung betrifft ferner ein Funk-Kommunikationssystem mit mindestens einer Basisstation und mindestens einer Teilnehmerstation, welche über eine Funkschnittstelle miteinander verbunden sind, zur Durchführung der oben beschriebenen Verfahren gemäß der Erfindung.

Die Erfindung wird im Folgenden anhand eines Ausführungsbeispiels gemäß dem HIPERLAN/2-Standard näher erläutert.

Hierbei zeigen:
- Figur 1:: die Interferenzsituation bei zufälliger Sendeaktivität mehrerer Stationen (Stand der Technik),
- Figur 2:: die vergleichbare Interferenzsituation bei Anwendung der Erfindung.

Bei HIPERLAN/2 werden die Funkressourcen in Form von Frequenzkanälen an die Basisstationen (Access Point, AP) vergeben. Die Basisstationen weisen die Funkressourcen paketweise für sowohl den Uplink als auch für den Downlink dynamisch den einzelnen Teilnehmerstationen zu. Die Rahmenstruktur besteht dabei aus einem MAC-Rahmen mit einer konstanten Länge von zwei Millisekunden. Der MAC-Rahmen entspricht im Ausführungsbeispiel der zu betrachtenden Zeitspanne. Die Aufteilung der Funkressourcen an die individuellen Teilnehmerstationen und ihre Verbindungen ist nicht statisch, sondern kann sich vielmehr dynamisch von MAC-Rahmen zu MAC-Rahmen ändern.

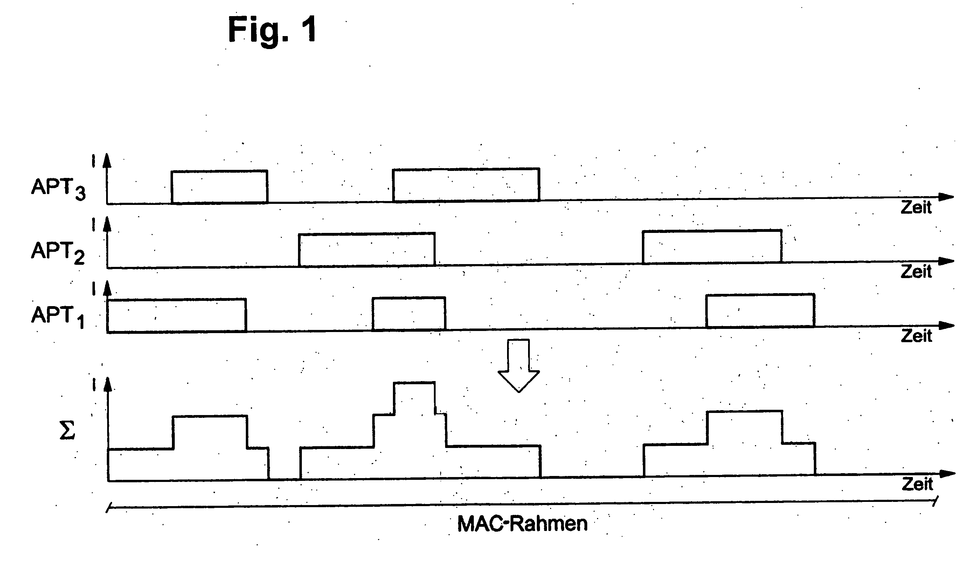

In Figur 1 ist die Sendeleistung über der Zeit t während eines MAC-Rahmens für den Funkverkehr dreier Basisstationen APT₁, APT₂ und APT₃ aufgezeigt. Die Sendeaktivitäten sind dabei zufällig über den MAC-Rahmen verteilt. Ferner ist im unteren Teil in Figur 1 die gesamte daraus resultierende Interferenzsituation dargestellt. An der Summendarstellung der Interferenz ist deutlich zu erkennen, dass der Verlauf der Interferenz zeitlich über den MAC-Rahmen starken Schwankungen unterliegt.

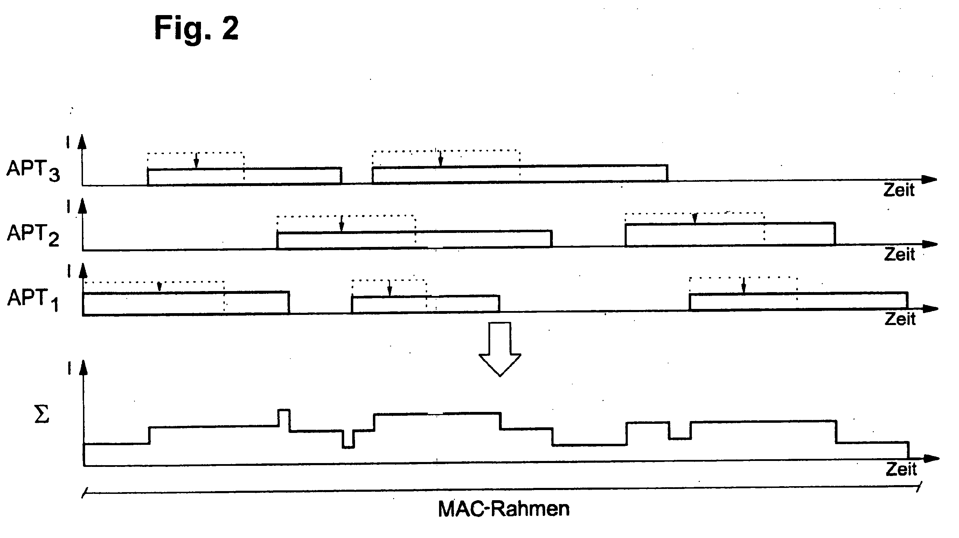

In Figur 2 sind die Sendeleistungen über den MAC-Rahmen dargestellt, die sich aus zu den Basisstationen APT₁ bis APT₃ zugehörigen Funkaktivitäten ergeben. Im gezeigten Ausführungsbeispiel nach Figur 2 ist die Modulation und/oder Codierung so gewählt und damit optimiert, dass die Übertragungszeit für die zu übertragende Informationsmenge erhöht wird und auf diese Weise der Länge der durch den MAC-Rahmen vorgegebenen Zeitspanne angenähert ist. Die Sendeleistungen pro übertragenem Symbol können auf diese Weise deutlich verringert werden.

Um die Unterschiede zum in Figur 1 gezeigten Fall deutlich darzustellen, sind die Sendeleistungen aus Figur 1 durch gestrichelte Linien angegeben. Die Pfeile verdeutlichen dabei die Verringerung der Sendeleistungen, die sich auf Grund der Erfindung einstellen. Im unteren Teil der Figur 2 ist die sich durch die Sendeaktivitäten insgesamt ergebende Interferenzsituation dargestellt. Die sich im Fall von Figur 2 einstellende Interferenz ist über den MAC-Rahmen wesentlich homogener verteilt als im in Figur 1 dargestellten Fall.

Durch den Einsatz der Erfindung kann der PHY-Modus und die Sendeleistung im Beispiel von Figur 2 soweit reduziert werden, dass die verfügbare Übertragungszeit möglichst vollständig genutzt wird. Die resultierend Interferenz wird gleichmäßiger innerhalb des MAC-Rahmens verteilt. Da bei HIPERLAN/2 die Auswahl des PHY-Modus und die Steuerung der Sendeleistung zentral erfolgen, kann ein entsprechender Algorithmus in der Basisstation (AP) leicht implementiert werden.

## Patentansprüche

1. Verfahren zum Übertragen von Informationen in einem Funk-Kommunikationssystem mit mindestens einer Basisstation und mindestens einer Teilnehmerstation,
welche über eine Funkschnittstelle miteinander verbunden sind,
wobei die Übertragung mittels eines TDMA-Vielfachzugriffsverfahrens mit einer zeitlichen Rahmenstruktur erfolgt,
wobei in einer gegebenen Zeitspanne der Rahmenstruktur bei einer zu übertragenden Informationsmenge die Informationen über unterschiedliche Modulationen und/oder Codierungen bei variabler Sendeleistung übertragen werden, **dadurch gekennzeichnet,**
**dass** innerhalb der Zeitspanne die Modulation und/oder Codierung derart gewählt werden, dass die Übertragungszeit für die zu übertragende Informationsmenge der Länge der Zeitspanne angenähert ist.

2. Verfahren nach Anspruch 1, **dadurch gekennzeichnet, dass** die Sendeleistung im wesentlichen homogen über die Zeitspanne verteilt wird.

3. Verfahren nach Anspruch 2, **dadurch gekennzeichnet, dass** die Sendeleistung auf über 75 %, vorzugsweise auf über 80 %, besonders bevorzugt auf über 90 % der Zeitspanne verteilt wird.

4. Verfahren nach einem der Ansprüche 1 bis 3, **dadurch gekennzeichnet, dass** die Sendeleistung im wesentlichen homogen über die gesamte Rahmenstruktur verteilt wird.

5. Verfahren nach Anspruch 4, **dadurch gekennzeichnet, dass** die Sendeleistung auf über 50 %, vorzugsweise auf über 60 %, besonders bevorzugt auf über 70 % der gesamten Rahmenstruktur verteilt wird.

6. Verfahren nach einem der Ansprüche 1 bis 5, **dadurch gekennzeichnet, dass** die Sendeleistung so geregelt wird, dass bei möglichst kleiner Sendeleistung eine geforderte Übertragungsgüte eingehalten wird.

7. Verfahren nach einem der Ansprüche 1 bis 6, **dadurch gekennzeichnet, dass** die Übertragung in einer festen zeitlichen Rahmenstruktur erfolgt.

8. Verfahren nach einem der Ansprüche 1 bis 7, **dadurch gekennzeichnet, dass** eine paketweise Übertragung vorgesehen ist.

9. Verfahren nach einem der Ansprüche 1 bis 8, **dadurch gekennzeichnet, dass** die Modulation und/oder Codierung für mindestens eine Basisstation und für zumindest zwei mit dieser Basisstation verbundenen Teilnehmerstationen gemeinschaftlich gewählt werden.

10. Verfahren nach einem der Ansprüche 1 bis 9, **dadurch gekennzeichnet, dass** die Sendeleistung und Modulation und/oder Codierung so gewählt werden, dass die Empfangsleistung am Empfänger im wesentlichen konstant bleibt.

11. Verfahren nach einem der Ansprüche 1 bis 10, **dadurch gekennzeichnet, dass** die Übertragung mittels eines TDMA/TDD-Vielfachzugriffsverfahrens erfolgt.

12. Verfahren nach Anspruch 11, **dadurch gekennzeichnet, dass** das Funk-Kommunikationssystem nach dem HIPERLAN/2-Standard spezifiziert ist.

13. Verfahren nach Anspruch 11, **dadurch gekennzeichnet, dass** das Funk-Kommunikationssystem nach dem IEEE802.11a-Standard spezifiziert ist.

14. Verfahren nach Anspruch 11, **dadurch gekennzeichnet, dass** das Funk-Kommunikationssystem nach dem HiSWAN-A-Standard spezifiziert ist.

15. Basisstation zum Übertragen von Informationen in einem Funk-Kommunikationssystem zur Durchführung eines Verfahrens nach einem der vorangehenden Ansprüche.

16. Funk-Kommunikationssystem mit mindestens einer Basisstation und mindestens einer Teilnehmerstation, welche über eine Funkschnittstelle miteinander verbunden sind, zur Durchführung eines Verfahrens nach einem der vorangehenden Ansprüche.
